Europäisches Patentamt

European Patent Office

Office européen des brevets

(19)

(11) Numéro de publication: **0 172 050**
**A1**

(12) **DEMANDE DE BREVET EUROPEEN**

(21) Numéro de dépôt: **85401277.0**

(22) Date de dépôt: **25.06.85**

(51) Int. Cl.⁴: **B 29 C 67/14**
**B 29 D 31/00**

(30) Priorité: **25.07.84 FR 8411782**

(43) Date de publication de la demande:
**19.02.86 Bulletin 86/8**

(84) Etats contractants désignés:
**BE DE GB IT NL SE**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Roubinet, Pierre**
**48 bis, rue Amédée Dufaure**
**F-92500 Rueil Malmaison(FR)**

(74) Mandataire: **Réal, Jacques et al,**
**Régie Nationale des Usines Renault SCE 0804**
**F-92109 Boulogne Billancourt Cedex(FR)**

(54) **Procédé de moulage de préimprégnés à fibres orientées.**

(57) Procédé de moulage à la presse à chaud de préimprégnés à fibres orientées et à matière organique. On utilise la force de fermeture de la presse conformatrice pour la mise en place des fibres aux endroits à renforcer dans la pièce, pour leur donner une précontrainte longitudinal et évacuer l'excédent de résine et les bulles d'air qui y sont incluses en direction desextrémités libres (11-11') de la pièce (10) conformée.

Application à la fabrication de lames de ressort de suspension pour véhicule.

FIG.2

EP 0 172 050 A1

# PROCEDE DE MOULAGE DE PREIMPREGNES A FIBRES ORIENTEES

La présente invention se rapporte à un procédé de moulage à la presse à chaud de préimprégnés à fibres orientées et à matrice organique.

Les matériaux composites à fibres orientées et à matrice organique ont une grande capacité d'absorption d'énergie par déformation élastique. De plus, dans le cas d'une pièce surchargée, il est possible d'obtenir un endommagement progressif au lieu d'une rupture brutale.

Ces avantages sont mis à profit dans des applications telles que des pare-chocs, des lames de ressort, des renforts de structure et autres pièces de sécurité. Les meilleurs résultats sont obtenus en disposant des fibres continues orientées dans le sens des contraintes principales.

Les pièces de profil et de courbure variables peuvent être fabriquées selon un procédé d'enroulement filamentaire tel que celui décrit dans le brevet 71-45 055 de la demanderesse.

Les pièces de profil et de courbure constants peuvent être fabriquées en continu selon un procédé décrit dans le brevet 73-46 906 également de la demanderesse.

Le but de la présente invention est la réalisation dans des conditions de fabrication industrielle de pièces présentant une plus grande liberté de forme, par un procédé de moulage à la presse à chaud à partir de nappes de fibres de renforcement.

Un avantage supplémentaire réside dans le fait que les fibres de renforcement sont tendues dans le sens de leur travail, renforçant ainsi les propriétés mécaniques du produit obtenu.

L'invention sera maintenant décrite, à titre d'exemple non limitatif, au regard des figures 1 à 6 ci-jointes, qui se rapportent respectivement :

- la figure 1, à une vue en perspective d'une lame de ressort de suspension pour véhicule utilitaire,

- la figure 2, à un schéma selon une coupe longitudinale d'une vue de détail du dispositif permettant la mise en oeuvre du procédé de l'invention.

- la figure 3, à une vue en coupe transversale d'un schéma de dispositif permettant la mise en oeuvre du procédé selon l'invention.

- les figures 4 et 5 une vue en perspective de l'ensemble poinçon-matrice, respectivement avant et après leur rapprochement.

- la figure 6, à une vue en perspective d'un perfectionnement du produit obtenu selon l'invention.

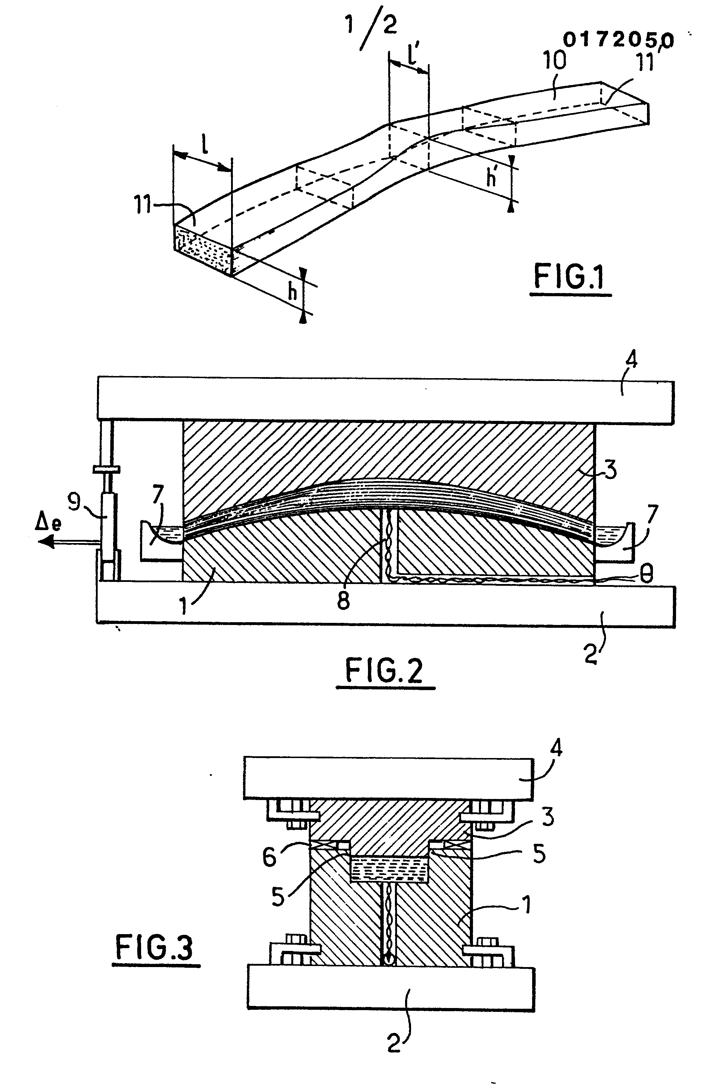

Pour obtenir une lame de ressort de suspension 10 telle que représentée à la figure 1, qui est renforcée essentiellement par des fibres unidirectionnelles, longitudinales, continues et travaillant en flexion sur deux appuis disposés à ses extrémités 11, 11', on peut utiliser un moule en acier tel que représenté à la figure 2.

La matrice 1, placée sur le plateau inférieur 2 d'une presse non figurée et connue en soi, comporte la courbure convexe ; le poinçon 3 qui présente la courbure concave, est monté sur le plateau supérieure 4. Un thermocouple 8 est disposé dans la matrice 1 et un capteur de déplacement 9 est intercalé entre les plateaux 2 et 4.

On notera que les parties du moule correspondant aux extrémités de la lame sont ouvertes et pourvues de petits bacs 7 destinés à recevoir la résine excédentaire lors de l'opération de pressage.

On voit à la figure 3 que les joints entre le poinçon 3 et la matrice 1 sont verticaux, des butées amovibles 6 permettant de limiter la course de ces éléments, réglant ainsi l'épaisseur finale des pièces moulées.

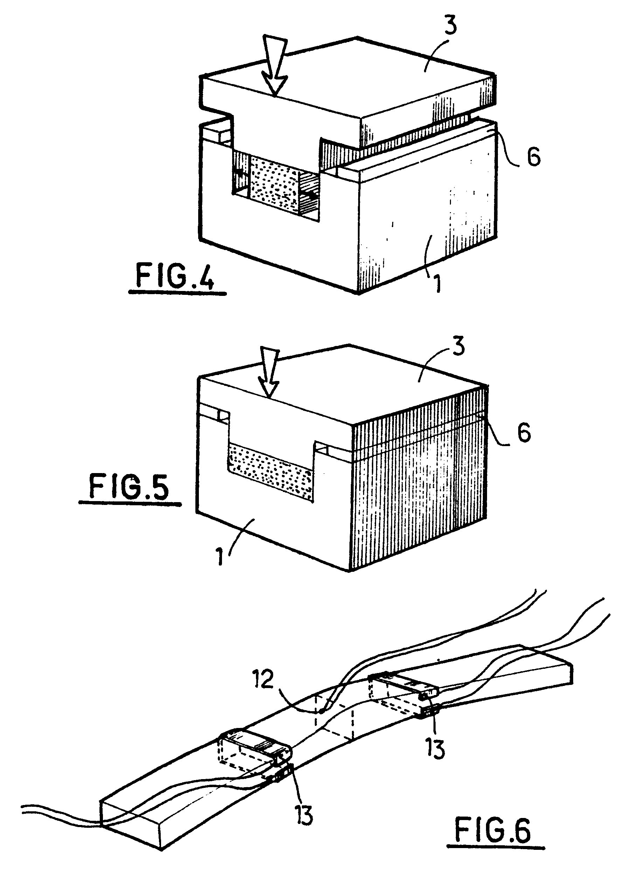

Le fonctionnement du dispositif ci-dessous est schématisé aux figures 4 et 5.

. Contrairement aux procédés antérieurs selon lesquels les fibres pré-imprégnées ou imprégnées au moment du moulage sont disposés directement aux endroits à renforcer ; on utilise ici la force de fermeture de la presse conformatrice pour leur mise en place .

De surcroît, cette action permet une tension des fibres selon leur sens longitudinal et, simultanément, une évacuation de l'excédent de résine volontairement apporté en direction des bacs 7 ainsi que des bulles d'air qui auraient pu être incluses.

On obtient ainsi un matériau composite pouvant comporter plus de 60 % de fibres en volume et dépourvu de porosité.

Le préimprégné utilisé peut-être constitué de fibres de verre E et de résine époxy du type DGEBA et est fabriqué par la Ste BROCHIER INDUSTRIE.

Il se présente sous forme d'une bande de faible épaisseur (0,6 à 0,7 mm) et de largeur légèrement inférieure à celle de la lame de ressort qui doit être conformée, dans sa zone la plus étroite.

La viscosite de la résine, à la température ambiante, est suffisamment élevée pour que le préimprégné soit manipulable et malléable.

Une ébauche préalable peut-être confectionnée en empilant plusieurs couches de préimprégné.

Le moule est thermo-régulé à une température comprise entre 120 et 200°C.

Après les opérations préalables de nettoyage des empreintes 1 et 3 et d'application d'un agent de démoulage, on dispose l'ébauche ci-dessus dans la matrice 1 et on ferme la presse (figure 4), ce qui entraîne le remplissage du moule (figure 5).

Durant cette phase, le matériau est encore à basse température, la résine ayant une viscosité élevée, on observe un fluage transversal homogène sous faible pression.

Quand cette phase de mise en forme de l'ébauche est terminée celle-ci offre alors un effort résistant important permettant d'accroître la pression sur le matériau ; les fibres de verre parallèles et continues ne peuvent subir un fluage longitudinal tout en acceptant cependant une certaine précontrainte ; seuls l'excès de résine qui les lie et les bulles d'air éventuelles qui s'y trouve sont entraînés vers les extrémités du moule pourvues des bacs 7.

Les plateaux 2-4 de la presse continuent de se rapprocher lentement, jusqu'à ce que les deux parties 1-3 du moule ne soient plus séparées que par les butées 6 qui déterminent l'épaisseur finale de la pièce.

La fin de fermeture est facilitée par la baisse de viscosité de la résine qui accompagne l'échauffement du matériau.

Puis, la résine entre dans sa phase de durcissement, dont on suit l'évolution à l'aide du thermocouple 8, la polymérisation s'accompagnant d'un pic exothermique, suivi à quelques minutes de l'ouverture de la presse et du démoulage de la pièce.

La résine excédentaire ayant durci dans les bacs 7, reste soudée à la pièce finale et se trouve ainsi simultanément évacuée avec elle ; l'excès de résine sera éliminé lors des opérations de finitions habituelles.

Le type de produit obtenu par le procédé ci-dessus, et qui est illustré par la figure 1, est remarquable en ce que l'on fait évoluer sa largeur L et sa hauteur H le long de son axe longitudinal de telle façon que pour chaque section transversale donnée le produit $1 \times h = 1' \times h' = 1_n \times h_n =$ constante, avec un maximum pour $h = h'$ au milieu de la lame de ressort 10. La règle de variation de ces deux paramètres est calculée en fonction des résultats à obtenir et donne lieu à un allègement important de la lame, au regard d'une lame de largeur et de hauteur constante, à prestations mécaniques équivalentes.

On peut encore améliorer le produit ci-dessus en lui intégrant, comme on le voit à la figure 6, un détecteur de début d'endommagement ; celui-ci peut-être constitué par un thermocouple électrique 12 situé de préférence à mi-longueur de la lame 10 et/ou au moins une zône de métallisation superficielle 13 disposée avant ou après le moulage de la lame 1, dans les zônes les plus contraintes.

Ainsi, un échauffement anormal et/ou une rupture du circuit électrique établi dans la partie/13 réuni à un témoin connu en soi, signale au conducteur un début d'endommagement de la lame au niveau desdits détecteurs, permettant encore le déplacement du véhicule, mais imposant pour les raisons de sécurité le proche remplacement de la lame en cause.

REVENDICATIONS

1. Procédé de moulage à la presse à chaud de préimprégnés à fibres orientées et à matières organique caractérisé par le fait que l'on utilise la force de fermeture de la presse conformatrice pour la mise en place des fibres aux endroits à renforcer dans la pièce, pour leur donner une précontrainte longitudinale et évacuer l'excédent de résine et les bulles d'air qui y sont incluses en direction des extrémités libres 11-11' de la pièce 10 conformée.

2. Procédé de moulage selon la revendication 1, caractérisé en ce que les fibres sont des fibres de verre E et que la résine est du type époxy.

3. Procédé de moulage selon la revendication 1, caractérisé en ce que l'on dispose dans le moule chauffé à une température comprise entre 120 et 200°C une ébauche constituée de plusieurs couches de matériau préimprégné, de largeur légèrement inférieure à celle du moule, que l'on ferme doucement ce dernier pour assurer la mise en place du matériau sur toute la surface du moule, que le matériau en contact avec le moule s'échauffe progressivement et que simultanément on augmente la pression exercée sur le matériau jusqu'à ce que les deux parties du moule 1-3 ne soient séparées que par les butées 6 déterminant l'épaisseur finale de la pièce, que l'on maintient dans cette situation pendant quelques minutes permettant ainsi la polymérisation de la résine, que l'on ouvre alors la presse et que l'on démoule la pièce ainsi obtenue en entraînant simultanément la résine excédentaire évacuée du moule lors de la phase de pressage, qui sera désolidarisée de la pièce lors des opérations de finitions ultérieures.

4. Dispositif pour la mise en oeuvre du procédé selon la revendication 1, constitué par une presse dont les plateaux 2-4 supportent respectivement une matrice 1 et un poinçon 3, caractérisé en ce que ces éléments conformateurs 1-3 sont ouverts sur les côtés correspondants aux extrémités 11-11' de la pièce à former et pourvus à ces endroits de bacs 7 destinés à recevoir l'excès de résine lors de la phase de pressage du préimprégné.

5. Dispositif selon la revendication 4, caractérisé en ce que les éléments mobiles de la presse se rapprochant sont pourvus de moyens permettant de suivre l'évolution du procédé, en particulier d'un thermocouple 8 et d'un capteur de déplacement 9, disposés respectivement dans la matrice 1 et entre les plateaux 2-4.

6. Dispositif selon la revendication 4, caractérisé en ce que les joints 5 entre la matrice 1 et le poinçon 3 sont verticaux, cesdits éléments de moule étant maintenus à distance, après leur fermeture, au moyen de butées 6 dont l'épaisseur détermine celle du produit final.

7. Produit résultant de la mise en oeuvre du procédé selon la revendication 1, caractérisé en ce que ce dernier donne lieu à une lame de ressort 10 dont la largeur l et la hauteur h évoluent le long de son axe longitudinal de telle façon que pour chaque section transversale le produit l x h soit constant, la valeur de h étant maximale à mi-longueur de la lame de ressort 10.

8. Produit selon la revendication 7, caractérisé en ce qu'il comporte un détecteur de début d'endommagement constitué par un thermocouple électrique 12 situé de préférence à mi-longueur de la lame 10 et par au moins une zône de métallisation superficielle 13, disposée dans les zônes les plus contraintes et réunie par un circuit électrique à un témoin, connu en soi, signalant au conducteur tout début d'endommagement au niveau desdits détecteurs.

**FIG.1**

**FIG.2**

**FIG.3**

FIG.4

FIG.5

FIG.6

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | GB-A-2 100 835 (THE BUDD COMPANY) <br> * Page 1, ligne 114 - page 2, ligne 11; page 3, lignes 44-84; page 4, lignes 16-40; figures 7-9 * | 1-4,6, 7 | B 29 C 67/14 <br> B 29 D 31/00 |
| X | GB-A-2 041 489 (COURTAULDS LTD.) <br> * Page 1, ligne 5 - page 2, ligne 57; figures * | 1,7 | |
| X | GB-A-2 101 033 (LEADER BERG LTD. A/S) <br> * Page 1, lignes 50-97; page 2, lignes 11-21 et 45-92; figures * | 1 | |
| A | | 2-4 | **DOMAINES TECHNIQUES RECHERCHES (Int. Cl.4)** |
| X | WO-A-8 300 118 (THE BOEING CO.) <br> * Page 2, ligne 15 - page 3, ligne 3; page 4, ligne 17 - page 5, ligne 6; page 6, ligne 34 - page 7, ligne 18; figures * | 1 | B 29 C |
| A | | 3,4,6 | |
| A | US-A-2 621 140 (E.V. BITTERLI et al.) <br> * Colonne 3, lignes 31-50; figure * | 1,3 | |

-/-

Le présent rapport de recherche a été établi pour toutes les revendications

| Lieu de la recherche <br> LA HAYE | Date d'achèvement de la recherche <br> 01-11-1985 | Examinateur <br> SZAMOCKI G.J.A. |
|---|---|---|

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| A | GB-A- 781 333 (E.P. WARNKEN)<br>* Page 3, lignes 92-121; figures 1,2,7 * | 1,3 | |
| A | FR-A-2 513 564 (KAWASAKI YUCOH CO. LTD.)<br>* Page 7, ligne 4 - page 9, ligne 22; figures * | 4-6 | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 01-11-1985 | SZAMOCKI G.J.A. |